# EUROPÄISCHE PATENTSCHRIFT

(11) **EP 2 448 743 B1**
(45) Veröffentlichungstag und Bekanntmachung des Hinweises auf die Patenterteilung: **23.10.2013**
(21) Anmeldenummer: 10730083.2
(22) Anmeldetag: 23.06.2010
(51) Int. Cl.: B29C 49/16, B29C 49/20, B29C 49/58, B29C 49/04, B29C 49/48, B29C 49/60

(54) **VERFAHREN ZUR HERSTELLUNG EINES ARTIKELS AUS THERMOPLASTISCHEM KUNSTSTOFF**
METHOD FOR PRODUCING AN ITEM MADE OF THERMOPLASTIC PLASTIC
PROCÉDÉ DE FABRICATION D'UN ARTICLE EN PLASTIQUE THERMOPLASTIQUE

(30) Priorität: 01.07.2009 DE 102009031441
(43) Veröffentlichungstag der Anmeldung: 09.05.2012
(73) Patentinhaber: Kautex Maschinenbau GmbH, 53229 Bonn (DE)
(72) Erfinder: LICHTENAUER, Andreas, 53225 Bonn (DE); WALBROEL, Stefan, 53757 Sankt Augustin (DE)
(74) Vertreter: polypatent BGL
(86) Internationale Anmeldenummer: PCT/EP2010/003830
(87) Internationale Veröffentlichungsnummer: WO 2011/000504

(56) Entgegenhaltungen:
- EP-A2- 0 103 832
- WO-A1-2008/138869
- JP-A- 55 007 405
- JP-A- 61 110 529
- US-A- 4 952 347

## Beschreibung

Die Erfindung betriff ein Verfahren zur Herstellung eine Artikels aus thermoplastischem Kunststoff durch Extrusionsblasformen.

Beim Extrusionsblasformen wird in der Regel ein schlauchförmiger Vorformlingschlauch aus erweichtem thermoplastischem Kunststoff aus einer Ringspaltdüse ausgestoßen/extrudiert und zwischen die geöffneten Hälften eines mehrteiligen Blasformwerkzeugs verbracht. Alternativ kann der Extrusionskopf oberhalb des Werkzeugs derart angeordnet sein, dass der Vorformling hängend zwischen die geöffneten Teile des Werkzeugs extrudiert wird. Das Werkzeug schließt sich um den Vorformling, dieser wird in der Regel unter Einbringung eines Druckmittels innerhalb einer Kavität der Blasform aufgeweitet. Die Kavität der Blasform definiert die fertige Gestalt des herzustellenden Artikels. Das Um- und Ausformen des Artikels erfolgt beim Blasformen in der Regel in der ersten Hitze des warmplastisch extrudierten Kunststoffmaterials.

Durch Extrusionsblasformen werden sowohl kleine, als auch große Hohlkörper, wie beispielweise Fläschchen, Flaschen, Fässer, Kraftstofftanks für Kraftfahrzeuge bis hin zu großen Heizölbehältern hergestellt. Mitunter ist es erforderlich, in die herzustellenden Artikel Einbauteile einzubringen. Insbesondere bei der Herstellung von Kraftstofftanks sind im Behälter Funktionsbauteile, wie beispielsweise Pumpen, Geber, Schwalltöpfe, Schwalleinbauten und dergleichen anzubringen. Da diese Bauteile bedingt durch ihre Größe schlecht durch am fertigen Behälter vorzusehende Öffnungen nachträglich in diesen eingebracht werden können, ist man verschiedentlich dazu übergegangen, solche Einbauteile zu umblasen. Grundsätzlich ist es im Stand der Technik bekannt, in dem Behälter anzuordnende Einbauteile mittels eines Ladedorns in den geöffneten und zwischen den Blasformhälften platzierten Vorformling von unten einzubringen und die Blasform um den Schlauch und die von diesem umgebenden Einbauteile zu schließen.

Hierzu ist es vorteilhaft, den Ladedorn bzw. das Haltemittel für das Einbauteil vor dem Schließen der Blasform aus dem Vorformling herauszuführen. Dies wiederum erfordert eine wenigstens zeitweises Halten des Einbauteils im Inneren des Vorformlings.

Ein Verfahren zur Herstellung eines extrusionsblasgeformten Kunststoffartikels mit einem Einbauteil ist beispielsweise aus der WO 2008/138869 A1 bekannt. Dort wird das Einbauteil in das untere führende offene Ende des als Schlauch ausgebildeten Vorformlings mittels eines Ladedorns eingebracht, wenn oder während der Vorformling zwischen die geöffneten Teile des Blaswerkzeugs extrudiert wird. In einem weiteren Schritt wird der Vorformling vorgeblasen, anschließend wird das Einbauteil mittels im Werkzeug vorgesehener Schieber/Formvoreiler bezüglich des Werkzeugs fixiert, wobei gleichzeitig der Vorformling mit dem Einbauteil an den entsprechenden Stellen verschweißt wird. Der Ladedorn wird aus dem Werkzeug herausgefahren, sodann schließt sich das Werkzeug um den Vorformling mit dem in diesem fixierten Einbauteil, der Artikel wird fertig geblasen.

Diese Lösung ist mit dem Nachteil behaftet, dass das für die Herstellung des Artikels benötigte Werkzeug durch die in diesem vorzusehenden Schieber verhältnismäßig teuer und aufwendig ist.

Ein Verfahren zur Herstellung eines extrusionsblasgeformten Kunststoffartikels nach dem Oberbegriff von Anspruch 1 ist beispielsweise aus dem Dokument JP 61110529 A bekannt. Bei dem dort beschriebenen Verfahren wird eine metallene Einlage in einen extrusionsblasgeformten Stoßfänger angebracht, wobei die Einlage mittels eines ersten Haltemittels zwischen die geöffneten Teile des Blasformwerkzeugs verbracht wird. Innerhalb des Blasformwerkzeugs wird die metallene Einlage von einem zweiten Haltemittel übernommen, welches die Wandung des Vorformlings durchstößt. Das erste Haltemittel wird zwischen den Blasformhälften entfernt, diese werden geschlossen, so dann wird der Vorformling innerhalb des Werkzeugsmittels eines separaten Blasdorns aufgeweitet, welche eine in der metallenen Einlage vorgesehene Öffnung durchstößt.

Aus dem Dokument US 4,952,347 A ist ein Verfahren zur Herstellung eines Kraftstoffbehälters aus thermoplastischem Kunststoff bekannt, bei welchem ein schlauchförmiger Vorformling in eine mehrteilige Blasform eingeführt wird und ebenfalls nach Schließen der Blasform unter Anwendung von Differenzdruck aufgeweitet und ausgeformt wird. Bei dem Verfahren gemäß US 4,952,347 A wird ein mit Funktionsbauteilen bestückter Träger bei geöffnetem Werkzeug von unten in den Vorformling eingebracht. Sodann wird das Blasformwerkzeug geschlossen, wobei der Träger wenigstens randseitig zwischen die Werkzeuge und innerhalb des schlauchförmigen Vorformlings geklemmt wird. Sodann werden von verschiedenen Seiten Blasdorne durch die Wandung des voraufgeformten Vorformlings eingeschossen und der Artikel wird fertig geblasen.

Der Erfindung liegt daher die Aufgabe zugrunde, ein vergleichbares Verfahren bereitzustellen, welches mit vergleichsweise einfacheren Mitteln realisierbar ist. Weiterhin liegt der Erfindung die Aufgabe zugrunde, ein Verfahren zur Herstellung eines extrusionsblasgeformten Kunststoffartikels mit Einbauteilen bereitzustellen, welches hinsichtlich der Anzahl und Größe der am fertigen Behälter vorgesehenen Öffnungen optimiert ist. Dies ist insbesondere bei der Herstellung von Kraftstoffbehältern aus thermoplastischem Kunststoff wünschenswert, die üblicherweise aus Koextrudaten mit Barriereschichten für Kohlenwasserstoffe hergestellt werden.

Die Aufgabe wird gemäß der Erfindung gelöst durch ein Verfahren zur Herstellung eines Artikels aus thermoplastischem Kunststoff, bei welchem ein schlauchförmiger Vorformling in eine mehrteilige Blasform eingeführt und unter Anwendung von Differenzdruck aufgeweitet und ausgeformt wird, wobei wenigstens ein Einbauteil mittels eines ersten Haltemittels vor dem Ausformen des Vorformlings in diesen eingebracht wird und wobei das Einbauteil vor dem Ausformen des Vorformlings von wenigstens einem die Wandung des Vorformlings durchstoßenden zweiten Haltemittel übernommen wird, wobei das zweite Haltemittel als Blasdorn ausgebildet ist und eine Aufweitung und Umformung des Vorformlings durch Druckmittelbeaufschlagung mit dem zweiten bzw. durch das zweite Haltemittel erfolgt.

Die Begriffe "Blasdorn" und "Blasnadel" werden im Folgenden synonym verwendet. Es ist dem Fachmann geläufig, dass beide Begriffe den gleichen Gegenstand bezeichnen.

Die Lösung gemäß der Erfindung hat insbesondere den Vorzug, dass die ohnehin benötigte Blasnadel bzw. der ohnehin benötigte Blasdorn gleichzeitig zur Fixierung des in den Artikel einzubringenden Einbauteils dient. Erforderlichenfalls können auch mehrere Blasnadeln zur Fixierung verwendet werden. Das benötigte Werkzeug ist wesentlich einfacher, als das aus der WO 2008/138869 A1 bekannte Werkzeug.

Ein schlauchförmiger Vorformling im Sinne der vorliegenden Erfindung muss nicht notwendigerweise ein über seinen gesamten Umfang geschlossener Schlauch sein, vielmehr ist unter einem schlauchförmigen Vorformling beispielsweise auch ein einseitig der Länge nach aufgetrennter Schlauch zu verstehen. Der Querschnitt des "schlauchförmigen Vorformlings" muss auch nicht notwendigerweise kreisrund sein, vielmehr ist auch eine Manipulation des Vorformlings nach Austritt aus dem Extrusionskopf und vor Einbringen des Einbauteils zwischen die geöffneten Teile des Blaswerkzeugs im Rahmen der Erfindung.

Obwohl, wie nachstehend noch beschrieben wird, bei einem Ausführungsbeispiel gemäß der Erfindung vorgesehen ist, den Vorformling zwischen die Hälften eines geöffneten Blaswerkzeugs hängend in Schwerkraftrichtung zu extrudieren, kann der Vorformling auch an räumlich entfernter Stelle von dem Blaswerkzeug extrudiert werden und mit entsprechenden Greifeinrichtungen zum Blaswerkzeug verbracht werden.

Im Rahmen der Erfindung kann der Vorformling kontinuierlich oder diskontinuierlich extrudiert werden.

Der Vorformling wird bei dem in der Anmeldung beschriebenen Ausführungsbeispiel durch Druckmittelbeaufschlagung in Form von Blasluft aufgeweitet. Im Rahmen der Erfindung ist es auch, die Ausformung des Artikels mit im Werkzeug aufgebrachtem Unterdruck zu unterstützen.

Obwohl das Blaswerkzeug im folgenden als zweiteiliges Blaswerkzeug beschrieben wird, kann dieses mehr als zwei Teile aufweisen, insbesondere können einzelne in Bezug auf die durch den Vorformling definierte Trennebene des Werkzeugs bewegliche Formteile vorgesehen sein.

Bei einer vorteilhaften Variante des Verfahrens gemäß der Erfindung ist vorgesehen, dass das erste Haltemittel nach Übernahme des Einbauteils durch das zweite Haltemittel aus dem Vorformling herausgefahren wird. Das erste Haltemittel ist zweckmäßigerweise als Ladedorn mit Mitteln zur Aufnahme des Einbauteils versehen.

Zweckmäßigerweise wird der Vorformling nach dem Herausfahren des ersten Haltemittels an seinen Enden verschlossen und mittels des zweiten Haltemittels vor dem Schließen der Blasform vorgeblasen.

Alternativ kann der Vorformling vor dem Herausfahren des ersten Haltemittels an seinem oberen Ende verschlossen werden und mittels des ersten Haltemittels vorgeblasen werden. Bei dieser Variante dient das erste Haltemittel zum Vorblasen des Schlauchs, so dass der Blasdorn bzw. die Blasnadel in den voraufgeweiteten und stabilisierten Schlauch eingeschossen werden kann. Bei dieser Variante des Verfahrens ist es sinnvoll und zweckmäßig, das führende Ende des Schlauchs mittels einer entsprechend ausgebildeten Schließklappe zu verschließen. Nach dem Herausfahren des Ladedorns ist die verbleibende Öffnung ebenfalls mit geeigneten Mitteln zu verschließen, damit das Vor- und Aufblasen nicht unterbrochen wird.

Wenn der Vorformling mittels des zweiten Haltemittels vorgeblasen wird, kann der Schlauch an seinem führenden/unteren Ende mittels Formvoreilern oder Schiebern des Werkzeugs vorläufig verschlossen werden. Ein Verschließen des Schlauchs zwecks Vorblasen ist allerdings auch mit vom Werkzeug körperlich getrennten Mitteln, beispielsweise mittels eines Greifers oder einer Schlauchschließvorrichtung, möglich. Auch das obere an den Extrusionskopf angrenzende Ende des Schlauchs muss zwecks Vorblasen vorläufig verschlossen werden. Dies kann ebenfalls mittels Formvoreilern oder Schiebern des Werkzeugs oder mittels vom Werkzeug körperlich getrennten Mitteln, beispielsweise mittels Greifer oder Schlauchschließvorrichtung erfolgen.

Bei einer Variante des Verfahrens gemäß der Erfindung ist vorgesehen, dass der zu fertigende Artikel ein Kraftstoffbehälter für Kraftfahrzeuge ist.

Als Einbauteil kommt beispielsweise ein Funktionsbauteilträger in Betracht, der in den Artikel eingebracht wird.

Das Einbauteil kann alternativ als Versteifungselement in den Artikel eingebracht werden, welches vorzugsweise gegenüberliegende Wandungen des Artikels gegeneinander abstützt. Funktionsbauteilträger und Versteifungselement können auch in einem einzigen Bauteil verwirklicht sein.

Gegenüberliegend im Sinne der Erfindung muss nicht notwendigerweise diametral gegenüberliegend heißen. Je nach Geometrie des zu fertigenden Artikels kann auch eine Abstützung von zueinander verschränkten Flächen des Artikels vorgesehen sein.

Alternativ ist es möglich, das Einbauteil so in den Artikel einzubringen, dass dieses nur mit einer Wandung oder einem Wandbereich des Artikels verbunden ist. Beispielsweise kann das Einbauteil durch eine Vorschub- und/oder Rückzugsbewegung des zweiten Haltemittels an einer einzigen Wandung des Artikels befestigt werden.

Vorzugsweise wird das Einbauteil mit der Innenwandung des Artikels verschweißt. Hierzu ist es sinnvoll, das Einbauteil aus einem im Sinne einer Verschweißbarkeit mit der Behälterwandung kompatiblen Material herzustellen. Wird nach dem erfindungsgemäßen Verfahren beispielsweise ein Kraftstoffbehälter für Kraftfahrzeuge hergestellt, so kann beispielsweise der Vorformling aus einem mehrschichtigen Extrudat mit Barriereschichten für Kohlenwasserstoffe bestehen. Das Material wird in diesem Falle überwiegend aus HDPE mit EVOH-Barriereschichten bestehen. Zweckmäßigerweise ist das Einbauteil dann ebenfalls ein Bauteil aus HDPE (high density polyethylene), das mit dem Material des Vorformlings/Artikels verschweißbar ist.

Bei einer zweckmäßigen Ausgestaltung des Verfahrens gemäß der Erfindung wird das Einbauteil mit dem zweiten Haltemittel durchsetzt. Die Ausgestaltung des Einbauteils kann so gewählt werden, dass das zweite Haltemittel in Form des Blasdorns das Einbauteil an einer günstigen Stelle durchsetzt, derart, dass die in der Behälterwandung zu erzeugende Öffnung eine Lage aufweist, die beispielsweise ohnehin für eine im Behälter vorzusehende Öffnung vorgesehen ist, so dass es nicht erforderlich ist, das durch den Blasdorn/das zweite Haltemittel erzeugte Loch mittels hierfür vorgesehener Stopfen und/oder Deckel zu verschließen.

Das zweite Haltemittel kann zweckmäßigerweise zeitweise mit dem Einbauteil verrastet werden, d. h. formschlüssig verbunden werden. Beispielsweise kann das zweite Hilfsmittel bereichsweise bzw. abschnittsweise konisch ausgebildet sein, so dass mittels einer Vorschub- bzw. Rückzugsbewegung des Haltemittels das Einbauteil an der einen oder anderen gegenüberliegenden Artikelwandung befestigt werden kann, ohne sich notwendigerweise auch gegen die andere Behälterwandung abzustützen.

Je nach Lage und Anordnung sowie Ausbildung des Einbauteils kann es allerdings genügen, das Einbauteil mit dem Blasdorn so zu durchdringen, dass eine Sicherung des Einbauteils nur in Schwerkraftrichtung erforderlich ist. Dies hat den Vorzug, dass das Haltemittel in Form des Blasdorns verhältnismäßig einfach ausgebildet sein kann.

Das Einbauteil kann hierzu geeignete Montage-/Positionieröffnungen aufweisen.

Die Erfindung wird nachstehend anhand eines in den Zeichnungen dargestellten vorteilhaften Ausführungsbeispiels erläutert, und zwar mit Bezug auf die beigefügten Zeichnungen:

Es zeigen:
- Figur 1:: eine Schnittansicht durch einen Teil der Blasform und durch den Vorformling während der Einbringung des Einbauteils in den Vorformling,
- Figur 2:: eine Schnittansicht durch die geschlossene Blasform während der Aufweitung des Vorformlings und
- Figur 3:: eine Schnittansicht entsprechend der Figur 2 bei der Entnahme des fertigen Artikels.

Bei dem Verfahren gemäß der Erfindung wird zunächst ein schlauchförmiger Vorformling 1 kontinuierlich in Schwerkraftrichtung hängend aus einem Extrusionskopf 2 mit einer nicht dargestellten Ringspaltdüse ausgestoßen. Der Vorformling 1 wird zwischen die geöffneten Blasformhälften 3a, 3b eines Blasformwerkzeugs extrudiert.

Das Blasformwerkzeug ist in der Zeichnung stark vereinfacht dargestellt. Die Blasformhälften, die in sich jeweils mehrteilig ausgebildet sein können, können in bekannter Art und Weise auf Formaufspannplatten eines Schließgestells angeordnet sein, welches nicht dargestellt ist.

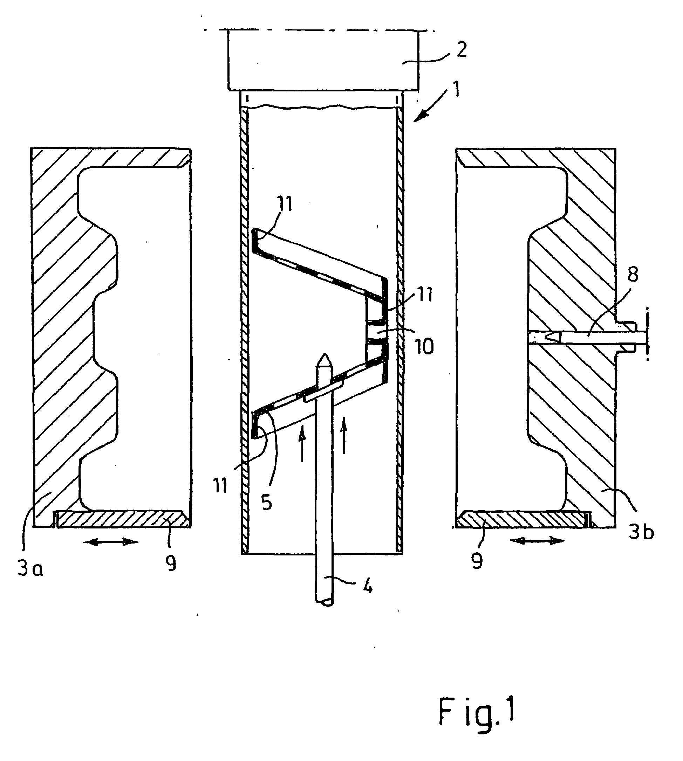

Vor, während oder nach der Extrusion des Vorformlings 1 auf die in Figur 1 gezeigte Länge wird zwischen den Blasformhälften 3a, 3b von unten ein Ladedorn 4 als erstes Haltemittel mit einem darauf positionierten Funktionsbauteilträger 5 als Einbauteil angeordnet.

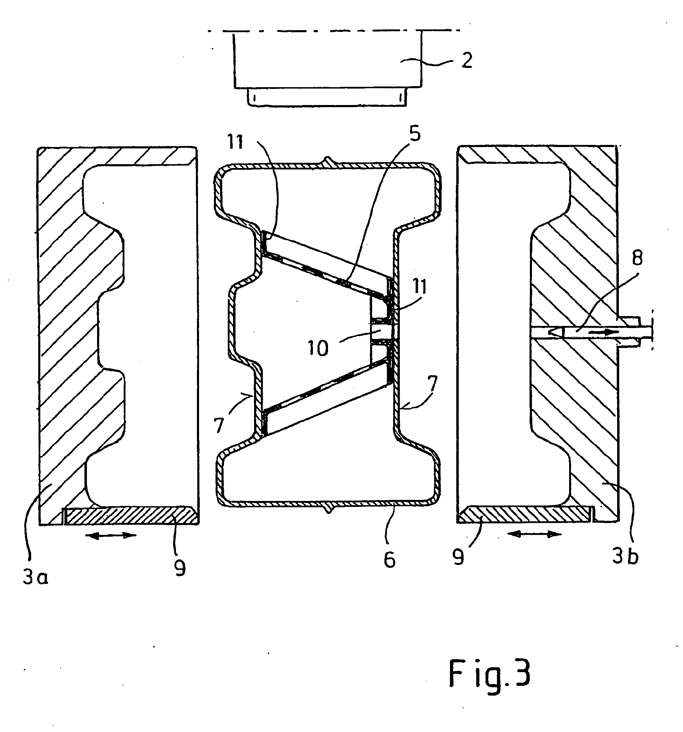

Der herzustellende Artikel (siehe Figur 3) ist als Kunststoff-Kraftstoffbehälter 6 mit in diesem anzuordnenden Funktionsbauteilträger 5 ausgebildet. Der Funktionsbauteilträger 5 nimmt nicht dargestellte Funktionsbauteile für den Kraftstoffbehälter, beispielsweise Fördereinheit mit Schwalltopf und Kraftstoffpumpe, Füllstandsgeber oder dergleichen auf.

Bei dem hier beschriebenen Ausführungsbeispiel ist der Funktionsbauteilträger 5, wie nachstehend noch beschrieben wird, so ausgebildet, dass er eine Aussteifung des fertigen Kraftstoffbehälters 6 derart bewirkt, dass er dessen gegenüberliegende Wandungen 7 gegeneinander abstützt.

Wie dies in Figur 1 dargestellt ist, ist in der Blasformhälfte 3b (in Figur 1 rechts dargestellt) ein Blasdorn 8 ein- und ausfahrbar angeordnet.

Nachdem der Funktionsbauteilträger 5 mit dem Ladedorn 4 innerhalb des Vorformlings 1 zwischen den Blasformhälften 3a, 3b positioniert wurde, wird der Blasdorn 8 in den nicht voraufgeweiteten / nicht vorgeblasenen Vorformling 1 eingeschossen. Dabei übernimmt der Blasdorn 8 den Funktionsbauteilträger 5. Der Ladedorn 4 wird zwischen den Blasformhälften 3a, 3b herausgefahren. Sodann werden die Enden des Vorformlings 1 sowohl an der dem Extrusionskopf 2 zugewandten Seite als auch an der führenden Seite verschlossen. An der führenden Seite des Vorformlings 1 erfolgt das Verschließen mittels der in den Figuren dargestellten Formvoreiler (Schieber) 9. Der Vorformling 1 wird vorgeblasen, sodann werden die Blasformhälften 3a, 3b vollständig geschlossen. Der Artikel wird anschließend fertig geblasen.

Wie in der Beschreibungseinleitung erwähnt, kann alternativ ein Vorblasen mittels des Ladedorns 4 erfolgen. In diesem Fall wird der Ladedorn 4 nach dem Vorblasen aus dem Vorformling 1 entfernt.

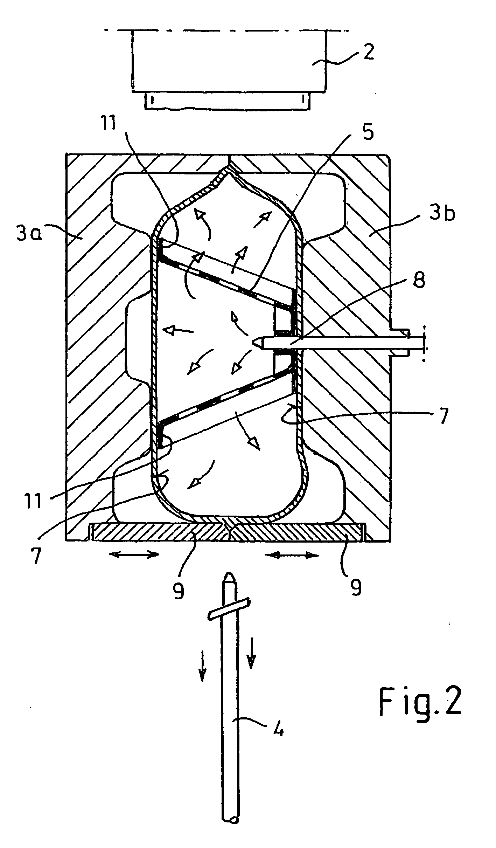

In den Zeichnungen ist in Figur 2 der Zustand dargestellt, bei welchem die Blasformhälften 3a, 3b vollständig geschlossen wurden.

Unmittelbar bevor der Ladedorn 4 zwischen den Blasformhälften 3a, 3b herausgefahren wurde, wurde der Funktionsbauteilträger 5 mit dem Blasdorn 8 an einer hierfür vorgesehenen Öffnung 10 durchdrungen, so dass der Funktionsbauteilträger 5 in der in Figur 2 dargestellten Lage in Schwerkraftrichtung von dem Blasdorn 8 gehalten wird.

Im Folgenden wird, wie dies in Figur 2 veranschaulicht ist, der Vorformling 1 vollständig unter Einbringen von Druckmittel (Blasluft) aufgeweitet, bis er die in Figur 3 gezeigte fertige Gestalt eingenommen hat.

Der Funktionsbauteilträger 5 liegt mit seinen Stützflächen 11 bei geschlossenen Blasformhälften 3a, 3b gegen die Wandung 7 des Vorformlings 1 an.

Nach vollständiger Aufweitung des Vorformlings 1 zu dem in Figur 3 dargestellten Kraftstoffbehälter 6 kann dieser als fertiger Artikel aus dem Werkzeug entnommen werden.

Nicht dargestellt ist das Verschließen, Abquetschen und/oder Trennen des Vorformlings 1 an seiner dem Extrusionskopf 2 zugewandten Seite. Die betreffenden Verfahrensschritte sind jedoch grundsätzlich im Stand der Technik bekannt.

### Bezugszeichenliste:

- 1: Vorformling
- 2: Extrusionskopf
- 3a, 3b: Blasformhälften
- 4: Ladedorn
- 5: Funktionsbauteilträger
- 6: Kraftstoffbehälter
- 7: Wandungen
- 8: Blasdorn
- 9: Formvoreiler
- 10: Öffnung
- 11: Stützflächen

## Patentansprüche

1. Verfahren zur Herstellung eines Artikels aus thermoplastischem Kunststoff, bei welchem ein schlauchförmiger Vorformling (1) in eine mehrteilige Blasform (3a, 3b) eingeführt und unter Anwendung von Differenzdruck aufgeweitet und ausgeformt wird, wobei wenigstens ein Einbauteil mittels eines ersten Haltemittels (4) vor dem Ausformen des Vorformlings (1) in diesen eingebracht wird und wobei das Einbauteil vor dem Ausformen des Vorformlings (1) von wenigstens einem die Wandung des Vorformlings (1) durchstoßenden zweiten Haltemittel (8) übernommen wird, **dadurch gekennzeichnet, dass** das zweite Haltemittel als Blasdorn (8) ausgebildet ist und eine Aufweitung und Umformung des Vorformlings (1) durch Druckmittelbeaufschlagung mit dem zweiten Haltemittel (8) erfolgt und dass der Vorformling (1) vor dem Herausfahren des ersten Haltemittels (4) an seinem oberen Ende verschlossen wird und mittels des ersten Haltemittels (4) vorgeblasen wird oder dass der Vorformling (1) nach dem Herausfahren des ersten Haltemittels (4) an seinen Enden verschlossen und mittels des zweiten Haltemittels (8) vor dem Schließen der Blasform (3a, 3b) vorgeblasen wird.

2. Verfahren nach Anspruch 1, **dadurch gekennzeichnet, dass** das erste Haltemittel (4) nach Übernahme des Einbauteils durch das zweite Haltemittel (8) aus dem Vorformling (1) herausgefahren wird.

3. Verfahren nach einem der Ansprüche 1 oder 2, **dadurch gekennzeichnet, dass** der zu fertigende Artikel ein Kraftstoffbehälter (6) für Kraftfahrzeuge ist.

4. Verfahren nach einem der Ansprüche 1 bis 3, **dadurch gekennzeichnet, dass** als Einbauteil ein Funtionsbauteilträger (5) in den Artikel eingebracht wird.

5. Verfahren nach einem der Ansprüche 1 bis 4, **dadurch gekennzeichnet, dass** als Einbauteil ein Versteifungselement in den Artikel eingebracht wird. welches vorzugsweise gegenüberliegende Wandungen (7) des Artikels gegeneinander abstützt.

6. Verfahren nach einem der Ansprüche 1 bis 4, **dadurch gekennzeichnet, dass** das Einbauteil durch eine Vorschub- und/oder Rückzugsbewegung des zweiten Haltemittels (8) an einer einzigen Wandung (7) des Artikels befestigt wird.

7. Verfahren nach einem der Ansprüche 1 bis 6, **dadurch gekennzeichnet, dass** das Einbauteil mit der Innenwandung des Artikels verschweißt wird.

8. Verfahren nach einem der Ansprüche 1 bis 7, **dadurch gekennzeichnet, dass** das zweite Haltemittel (8) das Einbauteil durchsetzt.

9. Verfahren nach einem der Ansprüche 1 bis 7, **dadurch gekennzeichnet, dass** das zweite Haltemittel (8) zeitweise mit dem Einbauteil verrastet wird.

## Claims

1. A process for producing an article from a thermoplastic material, in which a tube-shaped preform (1) is introduced into a multi-part blow mould (3a, 3b) and is expanded and formed by applying differential pressure, wherein, before the forming of the preform (1), at least one built-in part is introduced into this preform by means of a first holding means (4) and wherein, before the forming of the preform (1), the built-in part is taken over by at least one second holding means (8) penetrating the wall of the preform (1), **characterised in that** the second holding means is constructed as a blow mandrel (8) and an expansion and reshaping of the preform (1) takes place by applying a pressure medium with the second holding means (8), and **in that**, before the first holding means (4) is withdrawn, the preform (1) is closed at its upper end and pre-blown by means of the first holding means (4) or **in that**, after the first holding means (4) is withdrawn, the preform (1) is closed at its ends and pre-blown by means of the second holding means (8) before the blow mould is closed (3a, 3b).

2. A process according to Claim 1, **characterised in that** the first holding means (4) is withdrawn from the preform (1) after the built-in part has been taken over by the second holding means (8).

3. A process according to one of Claims 1 or 2, **characterised in that** the article to be produced is a fuel tank (6) for motor vehicles.

4. A process according to one of Claims 1 to 3, **characterised in that** a functional component carrier (5) is introduced into the article as a built-in part.

5. A process according to one of Claims 1 to 4, **characterised in that** a stiffening element which supports preferably opposing walls (7) of the article with respect to one another is introduced into the article as a built-in part.

6. A process according to one of Claims 1 to 4, **characterised in that** the built-in part is secured to a single wall (7) of the article by an advancing and/or retracting movement of the second holding means (8).

7. A process according to one of Claims 1 to 6, **characterised in that** the built-in part is welded to the inside wall of the article.

8. A process according to one of Claims 1 to 7, **characterised in that** the second holding means (8) passes through the built-in part.

9. A process according to one of Claims 1 to 7, **characterised in that** the second holding means (8) is temporarily latched to the built-in part.

## Revendications

1. Procédé de réalisation d'un produit en matière plastique thermoplastique, selon lequel une paraison (1) tubulaire est introduite dans un moule de soufflage (3a, 3b) en plusieurs parties et est évasée et formée sous l'effet de l'application d'une différence de pression, au moins un insert étant introduit dans ladite paraison à l'aide d'un premier moyen de support (4) avant le formage de la paraison (1), et ledit insert, avant le formage de la paraison (1), étant supporté par au moins un deuxième moyen de support (8) passant à travers la paroi de la paraison (1), **caractérisé en ce que** le deuxième moyen de support est réalisé sous la forme d'un mandrin de soufflage (8) et un évasement et un formage de la paraison (1) sont produits sous l'effet de l'application d'un moyen de pression avec le deuxième moyen de support (8), et **en ce que** la paraison (1) est fermée au niveau de son extrémité supérieure avant l'extraction du premier moyen de support (4) et est soumise à un soufflage préliminaire à l'aide du premier moyen de support (4) ou **en ce que** la paraison (1) est fermée au niveau de ses extrémités après l'extraction du premier moyen de support (4) et est soumise à un soufflage préliminaire à l'aide du deuxième moyen de support (8) avant la fermeture du moule de soufflage (3a, 3b).

2. Procédé selon la revendication 1, **caractérisé en ce que** le premier moyen de support (4) est extrait de la paraison (1) après que l'insert ait été pris en charge par le deuxième moyen de support (8).

3. Procédé selon l'une quelconque des revendications 1 ou 2, **caractérisé en ce que** le produit à fabriquer est un réservoir à carburant (6) pour véhicules.

4. Procédé selon l'une quelconque des revendications 1 à 3, **caractérisé en ce que** l'insert introduit dans le produit est un support pour composant fonctionnel (5).

5. Procédé selon l'une quelconque des revendications 1 à 4, **caractérisé en ce que** l'insert introduit dans le produit est un élément de renfort, qui sert d'appui réciproque à des parois (7), de préférence face à face, du produit.

6. Procédé selon l'une quelconque des revendications 1 à 4, **caractérisé en ce que** l'insert est fixé à une seule paroi (7) du produit sous l'effet d'un mouvement d'avance et/ou d'un mouvement de recul du deuxième moyen de support (8).

7. Procédé selon l'une quelconque des revendications 1 à 6, **caractérisé en ce que** l'insert est soudé à une paroi intérieure du produit.

8. Procédé selon l'une quelconque des revendications 1 à 7, **caractérisé en ce que** le deuxième moyen de support (8) traverse l'insert.

9. Procédé selon l'une quelconque des revendications 1 à 7, **caractérisé en ce que** le deuxième moyen de support (8) est temporairement bloqué avec l'insert.
